# EUROPEAN PATENT SPECIFICATION

(11) **EP 2 761 928 B1**
(45) Date of publication and mention of the grant of the patent: **25.03.2020**
(21) Application number: 11873093.6
(22) Date of filing: 29.09.2011
(51) Int. Cl.: H04W 4/70, H04W 60/00

(54) **METHODS AND APPARATUSES FOR DEVICE TRIGGERING**
VERFAHREN UND VORRICHTUNGEN ZUR TRIGGERUNG EINES GERÄTES
MÉTHODES ET APPAREILS DE DÉCLENCHEMENT DE DISPOSITIF

(43) Date of publication of application: 06.08.2014
(73) Proprietor: Nokia Solutions and Networks Oy, 02610 Espoo (FI)
(72) Inventor: CHANDRAMOULI, Devaki, Plano, TX 75074-2050 (US); ZAUS, Robert, 80686 Munich (DE); LIEBHART, Rainer, 81476 Munich (DE)
(74) Representative: Nokia EPO representatives
(86) International application number: PCT/US2011/053931
(87) International publication number: WO 2013/048403

(56) References cited:
- US-A1- 2004 102 199
- US-A1- 2010 067 371
- US-A1- 2011 021 216
- US-A1- 2011 122 818
- US-B2- 7 979 070
- ZTE: "Scenarios and Issues on Triggering Offline MTC Devices", 6 April 2011 (2011-04-06), 3GPP DRAFT; S2-111368, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, XP050524346, [retrieved on 2011-04-06] * paragraphs [0001] - [02.1] *
- "3rd Generation Partnership Project; Technical Specification Group Services and System Aspects; System Improvements for Machine-Type Communications; (Release 11)", 3GPP STANDARD; 3GPP TR 23.888, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V1.4.0, 5 August 2011 (2011-08-05), pages 1-139, XP050553713, [retrieved on 2011-08-05]

## Description

### BACKGROUND:

### Field:

For many machine to machine applications a poll model can be used for communications between machine type communication devices and the machine type communication server. In such and other communication systems device triggering solutions can permit efficient communication.

### Description of the Related Art:

Current device triggering approaches generally either require the assignment of a mobile subscriber integrated services digital number (MSISDN) to a device or circuit switched (CS) infrastructure or both. For example, short message service (SMS) over the SGs interface may require MSISDN as well as mobile switching center (MSC) and short message service center (SMSC) deployment.

Scenarios and Issues on Triggering Offline MTC Devices, 3GPP S2-111368, XP050524346, 3GPP TSG SA WG2 Meeting #84, 11 -15 April 2011, Bratislava, Slovakia, discloses triggering offline MTC devices to establish communication with an MTC server and states that a network shall be able to trigger MTC Devices to initiate communication with the MTC Server based on a trigger indication from the MTC Server and an MTC Device shall be able to receive trigger indications from the network and shall establish communication with the MTC Server when receiving the trigger indication.

### SUMMARY:

According to certain embodiments, a method includes preparing an attach request to be sent to a network element, wherein the attach request includes an indication of a device trigger capability of a user equipment. The method also includes activating the user equipment in response to a received device trigger.

A method, in certain embodiments, includes storing a device trigger capability of a user equipment received from the user equipment. The method also includes triggering the user equipment upon receiving a device trigger message from a machine type communication interworking function.

A method includes, according to certain embodiments, translating an application identifier to an access point name in response to receiving a device trigger message for a user equipment from a machine type communication server.

According to certain embodiments, an apparatus includes at least one memory including computer program instructions and at least one processor. The at least one memory and computer program instructions are configured to, with the at least one processor, cause the apparatus at least to prepare an attach request to be sent to a network element, wherein the attach request includes an indication of a device trigger capability of a user equipment. The at least one memory and computer program instructions are also configured to, with the at least one processor, cause the apparatus at least to activate the user equipment in response to a received device trigger.

An apparatus, in certain embodiments, includes at least one memory including computer program instructions and at least one processor. The at least one memory and computer program instructions are configured to, with the at least one processor, cause the apparatus at least to store a device trigger capability of a user equipment received from the user equipment. The at least one memory and computer program instructions are also configured to, with the at least one processor, cause the apparatus at least to trigger the user equipment upon receiving a device trigger message from a machine type communication interworking function.

An apparatus includes, in certain embodiments, at least one memory including computer program instructions and at least one processor. The at least one memory and computer program instructions are configured to, with the at least one processor, cause the apparatus at least to translate an application identifier to an access point name in response to receiving a device trigger message for a user equipment from a machine type communication server.

According to certain embodiments, an apparatus includes preparing means for preparing an attach request to be sent to a network element, wherein the attach request includes an indication of a device trigger capability of a user equipment. The apparatus also includes activating means for activating the user equipment in response to a received device trigger.

An apparatus, in certain embodiments, includes storing means for storing a device trigger capability of a user equipment received from the user equipment. The apparatus also includes triggering means for triggering the user equipment upon receiving a device trigger message from a machine type communication interworking function.

An apparatus includes, according to certain embodiments, receiving means for receiving a device trigger message for a user equipment from a machine type communication server. The apparatus also includes translating means for translating an application identifier to an access point name in response to receiving the device trigger message.

According to certain embodiments, a non-transitory computer readable medium is encoded with instructions that, when executed in hardware, perform a process. The process includes preparing an attach request to be sent to a network element, wherein the attach request includes an indication of a device trigger capability of a user equipment. The process also includes activating the user equipment in response to a received device trigger.

A non-transitory computer readable medium, in certain embodiments, is encoded with instructions that, when executed in hardware, perform a process. The process includes storing a device trigger capability of a user equipment received from the user equipment. The process also includes triggering the user equipment upon receiving a device trigger message from a machine type communication interworking function.

A non-transitory computer readable medium is, according to certain embodiments, encoded with instructions that, when executed in hardware, perform a process. The process includes translating an application identifier to an access point name in response to receiving a device trigger message for a user equipment from a machine type communication server.

### BRIEF DESCRIPTION OF THE DRAWINGS:

For proper understanding of the invention, reference should be made to the accompanying drawings, wherein:
Figure 1A illustrates delivery of a device trigger using short message service encoded at the mobility management entity, with the user equipment in idle mode according to certain embodiments.
Figure 1B illustrates delivery of a device trigger using short message service encoded at the mobility management entity, with the user equipment in active mode according to certain embodiments.
Figure 2 illustrates device trigger delivery using service accept, with the user equipment in idle mode according to certain embodiments.
Figure 3 illustrates device trigger delivery using a non-access stratum message when the user equipment is in idle mode according to certain embodiments.
Figure 4 illustrates device trigger delivery using a non-access stratum message, when the user equipment is in connected mode according to certain embodiments.
Figure 5 illustrates a method according to certain embodiments.
Figure 6 illustrates another method according to certain embodiments.
Figure 7 illustrates a further method according to certain embodiments.

### DETAILED DESCRIPTION:

A poll model for communication between machine type communication (MTC) devices and a machine type communication server may be of particular value to, for example, machine to machine (M2M) applications. This may be because a person using the services of the machine type communication server, known as the machine type communication user, may want to be in control of communication from machine type communication devices, and may not allow machine type communication devices to randomly access the machine type communication server. Also for applications where normally the machine type communication devices initiate communications, there may occasionally be a need for the machine type communication server to poll data from machine type communication devices.

If a machine type communication server has an internet protocol (IP) address available for a device from which it needs to poll data, the server may try to communicate with the device over IP using the IP address. If the communications fails, or if no IP address is available for the device, the machine type communication server can use a machine type communication device trigger mechanism to try to establish the communication. This may cause a packet data protocol (PDP) / packet data network (PDN) connection to be established (if such a connection does not already exist) or re-established (if the connection is not working, for example, after an error condition in the network). Some machine type communication users may desire it to be guaranteed that machine type communication devices can only be triggered by authorized machine type communication servers. If the network is not able to trigger the machine type communication device, for example due to network congestion, the network may report the trigger failure to the machine type communication server. The machine type communication device trigger can be a service provided by a 3rd Generation Partnership Project (3GPP) system for the machine type communication server over control plane signaling.

Triggering of machine type communication devices can be based on the use of an identifier identifying the machine type communication device that needs to be triggered. The identifier used by the machine type communication user in a triggering request to the machine type communication server can be different from the identifier used by the machine type communication server in a triggering request to a public land mobile network (PLMN) network.

Device triggering in, for example, release 11 (rel-11) of 3GPP may be configured to provide certain functionalities. For example, it may have the ability to trigger devices without the assignment of mobile subscriber integrated services digital network number (MSISDN) to device. It may also have the ability to trigger devices without the need for circuit switched (CS) infrastructure. Conventional approaches either require the assignment of an MSISDN or need circuit switched infrastructure, or both.

Certain embodiments, however, provide a solution for triggering a machine type communication device without the use of an MSISDN and without the need for heavy infrastructure changes.

In the example embodiments set forth below, the interface between machine type communication server and machine type communication interworking function (MTC-IWF) can use any protocol (for example, hypertext transfer protocol (http)). Likewise, the interface between the MTC-IWF and a home subscriber server (HSS) or MTC-IWF and mobility management entity (MME) can use any protocol (for example, Diameter or general packet radio service (GPRS) tunneling protocol (GTP). Moreover, the approaches described can be used in the case of universal mobile telecommunication system (UMTS) terrestrial radio access network (UTRAN), evolved UTRAN (E-UTRAN), or global system for mobile communications (GSM) enhanced data rates for GSM evolution (EDGE) radio access network (GERAN). For device triggering via UTRAN or GERAN, in the following descriptions the mobility management entity could be substituted by a serving GPRS support node (SGSN).

Thus, there are no assumptions on the protocols for these interfaces, and they can be configured based on deployment needs.

### Approach 1

In a first embodiment, delivery of device triggering information from a mobility management entity (MME) to a user equipment (UE) in an short message service (SMS) encoded message. This approach can use temporary identifiers for delivering the message to the user equipment.

In this embodiment, the encoding and sending an SMS message are performed at the mobility management entity and a temporary identifier can be used to deliver the SMS. Mapping the application identifier to APN can be performed in the MTC-IWF.

On the network side, according to a conventional technique, the SMS message, which may be in the form of a transfer protocol data unit (TPDU), is formatted by the short message service center (SMSC) and relayed transparently by the mobility management entity or SGSN. More precisely, between the user equipment and the SGSN or user equipment and mobile switching center (MSC), the TPDU is further encapsulated in a relay protocol data unit (RPDU), which in turn is encapsulated in a control protocol data unit (CPDU).

Thus, in this embodiment, if the TPDU is created by a mobility management entity or MTC-IWF, the mobility management entity or MTC-IWF also provides the RPDU and CPDU, which are normally formatted by the mobile switching center, when a short message is sent via SGs interface. Accordingly, in certain embodiments an SMS is created by a mobility management entity and/or an MTC-IWF without the need for an SMSC and/or MSC.

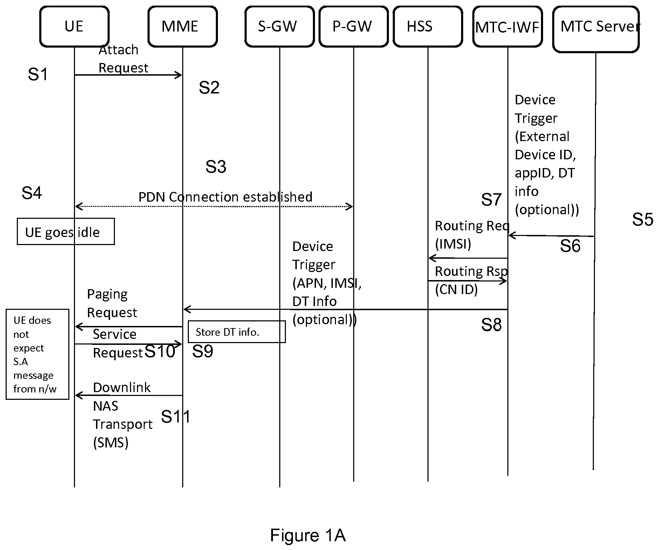

Figure 1A illustrates delivery of a device trigger using short message service encoded at the mobility management entity, with the user equipment in idle mode according to certain embodiments. Some details that are not relevant to a device trigger procedure are not shown or discussed.

As shown in Figure 1A, at S1, the user equipment (UE) can initiate an attach request and can indicate the user equipment's device trigger capabilities. Then, at S2, the mobility management entity (MME) can process the attach procedure. At S3, the packet data network (PDN) connection for the device has been established either as part of an attach procedure (for E-UTRAN) or subsequently (for UTRAN or, GERAN; for GERAN and UTRAN, establishment of a PDN connection is optional, that is to say it is not needed for the device trigger procedure). At S4, the UE goes idle. Then, at S5, the machine type communication (MTC) user identifies the need to trigger the device and informs the machine type communication server. The machine type communication server, at S6, requests the machine type communication interworking function (MTC IWF) to trigger the device. The server can do this by providing, for example, the external identifier, application identifier for the device, and so on.

The MTC-IWF ensures, at S7, that the request is an authentic request. The MTC-IWF may translate the application identifier (appID) to access point name (APN) and external identifier (extID) to international mobile subscriber identity (IMSI) and request the routing info (serving core network (CN) identifier (ID)) from a home subscriber server (HSS) by providing the IMSI for the device. The CN ID could be an IP address or fully qualified domain name (FQDN).

At S8, the MTC-IWF can use the CN ID to send a device trigger request message to the serving mobility management entity / serving GPRS support node (SGSN). The mobility management entity / SGSN can receive the device trigger (DT) message, notice that the device is in idle mode. Hence, at S9, the mobility management entity / SGSN can store the device trigger information and can pages the UE.

The user equipment, at S10, responds with a service request message (in GERAN: the user equipment may replay with a logical link control (LLC) frame). Then, at S11, the network formats an SMS message (TPDU encapsulated in RPDU, encapsulated in CPDU) with the necessary device trigger information and sends it in a downlink non-access stratum (NAS) transport message to the user equipment.

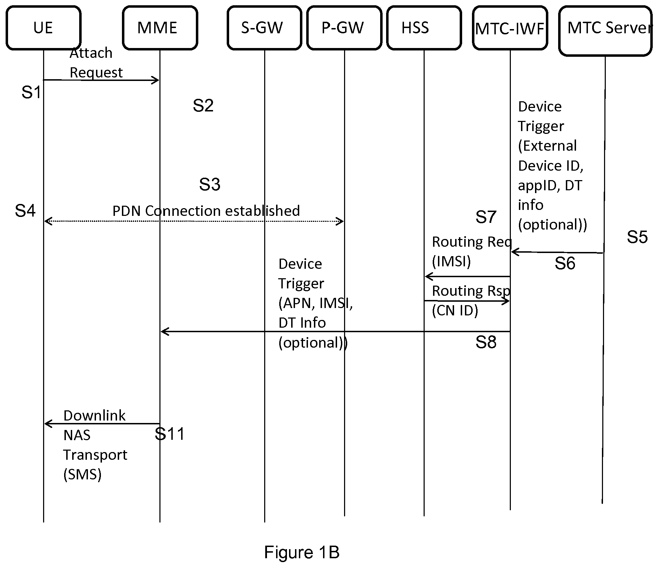

Figure 1B illustrates delivery of a device trigger using short message service encoded at the mobility management entity, with the user equipment in active mode according to certain embodiments. As shown in Figure 1B, the flow of signals can be similar to that in Figure 1A. However, the storage of the device trigger information, paging of the user equipment and response of the user equipment to the paging can be omitted.

### Approach 2

In a second embodiment delivery of device trigger information from the mobility management entity is in a service accept message. This approach can use temporary identifiers for delivering the message to the user equipment.

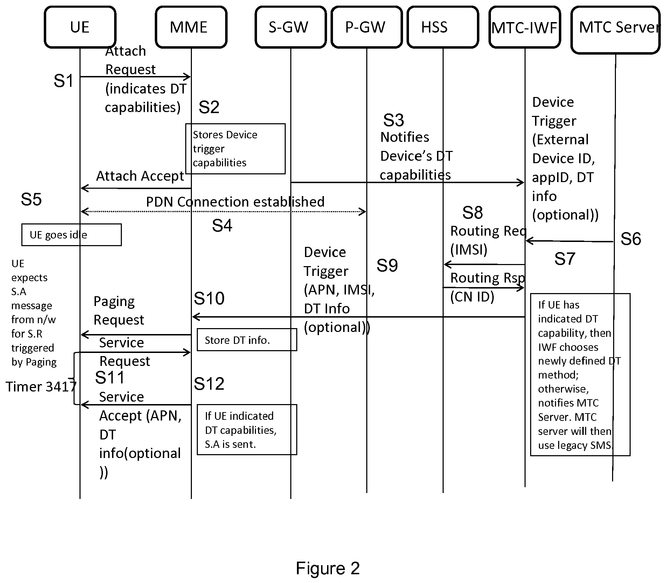

Figure 2 illustrates device trigger delivery using service accept, with the user equipment in idle mode according to certain embodiments. Some details that are not relevant to a device trigger procedure are neither shown nor discussed. As shown in Figure 2, at S1, the user equipment initiates an attach request and indicates the device trigger capabilities of the user equipment. Then, at S2, the mobility management entity processes the attach procedure and stores the device trigger capabilities. If the user equipment has indicated device trigger capabilities, at S3, the mobility management entity notifies the MTC-IWF of the device trigger capabilities. The mobility management entity can determine the MTC-IWF either based on configuration information within the mobility management entity or from a user's subscription information.

At S4, a packet data network connection for the device has been established either as part of attach procedure (for E-UTRAN) or subsequently (for UTRAN or GERAN; for GERAN and UTRAN establishment of a packet data network connection is optional, as it is not needed for the device trigger procedure). Then, at S5, the user equipment goes idle.

Subsequently, at S6, a machine type communication user can identify the need to trigger the device and can inform the machine type communication server. The machine type communication server, at S7, requests the IWF to trigger the device. The server provides, for example, the external identifier, application identifier for the device. Then, at S8, the MTC-IWF ensures it is an authentic request and may translate the appID to access point name, extID to IMSI and request the routing info (serving CN ID) from the home subscriber server by providing the IMSI for the device.

At S9, the MTC-IWF can use the CN ID to send a device trigger request message to the serving mobility management entity/SGSN. Then, at S10, the mobility management entity/SGSN can receive the device trigger message, and notice that the device is in idle mode. Thus, the mobility management entity/SGSN can store the device trigger information and page the user equipment.

Then, at S11, the user equipment can respond with a service request message (in GERAN: an LLC frame). Finally, at S12, since the user equipment indicated device trigger capabilities, it starts the timer T3417 and is expecting a service accept message from the network. The network can respond with a service accept message, which includes the necessary device trigger information.

### Approach 3

In a third embodiment, delivery of device trigger info can take place in a non-access stratum (NAS) message. If a mobility management entity/SGSN or MTC-IWF supports compression capability, device trigger information could be compressed and included in the NAS message. The mobility management entity /SGSN uses temporary identifiers for delivering the message to the UE.

There may be two variations on this third embodiment. In a first variation, the triggering is performed while the user equipment is initially in an idle mode. In a second variation, the triggering is performed when the user equipment is initially in a connected mode.

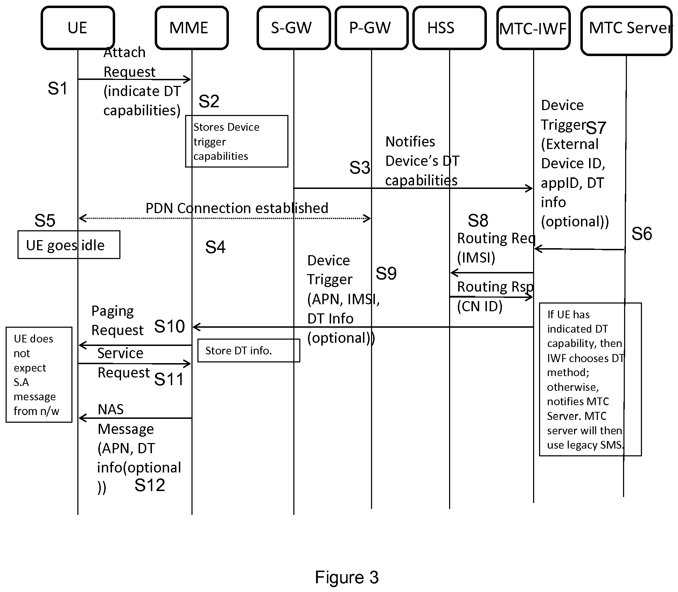

Figure 3 illustrates device trigger delivery using an NAS message when the user equipment is in idle mode according to certain embodiments. Some details that are irrelevant to a device trigger procedure are not shown or discussed. As shown in Figure 3, at S1, the user equipment initiates an attach request and indicates the user equipment's device trigger capabilities in the device properties section of the request. The mobility management entity processes the attach procedure and, at S2, stores the device trigger capabilities. If the user equipment has indicated device trigger capabilities, then, at S3, the mobility management entity provides notification of the device trigger capabilities to the MTC-IWF. The mobility management entity can determine the appropriate MTC-IWF either based on configuration information within the mobility management entity or from the user's subscription information.

At S4, the packet data network connection for the device has been established, either as part of attach procedure (for E-UTRAN) or subsequently (for UTRAN, GERAN; for GERAN and UTRAN establishment of a packet data network connection is optional, because it is not needed for the device trigger procedure). Then, at S5, the user equipment can go idle.

Subsequently, at S6, a machine type communication user can identify the need to trigger the device and can inform the machine type communication server. The machine type communication server can, at S7, request the IWF to trigger the device. The server can provide, among other things, the external identifier and application identifier for the device.

At S8, the MTC-IWF authenticate the request, translate the appID to APN and extID to IMSI, and send a request to the home subscriber server for the routing info (serving CN ID) by providing the IMSI of the device. The MTC-IWF can use the CN ID to send, at S9, a device trigger request message to the serving mobility management entity /SGSN.

Then, at S10, the mobility management entity / SGSN can receive the device trigger message, notice that the device is in idle mode, and consequently store the device trigger information and page the user equipment. When, at S11, the user equipment responds with a service request message (in GERAN: an LLC frame), since the user equipment indicated device trigger capabilities, at S12 the network sends a non-access stratum (NAS) message (for example, device trigger notification) encapsulating the necessary device trigger information.

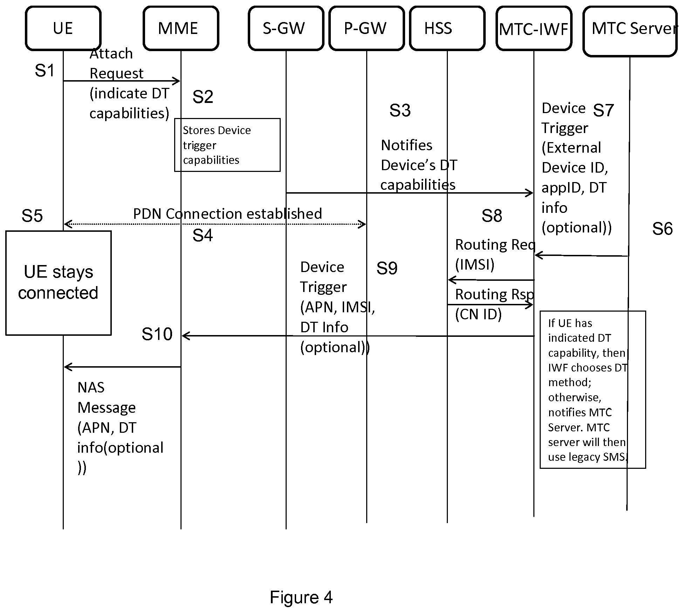

Figure 4 illustrates device trigger delivery using an NAS message, when the user equipment is in connected mode according to certain embodiments. Some details that are irrelevant to a device trigger procedure are neither shown nor discussed. As shown in Figure 4, at S1, the user equipment can initiate an attach request and indicate the device trigger capabilities of the user equipment in the Device properties. At S2, the mobility management entity processes the attach procedure and stores device properties, in this example.

Then, if the user equipment has indicated device trigger capabilities, then, at S3, the mobility management entity notifies the MTC-IWF of the device trigger capabilities of the user equipment. The mobility management entity can determine the MTC-IWF either based on configuration information within the mobility management entity, from user's subscription information, or any other way.

The packet data network connection for the device has been established, at S4, either as part of an attach procedure (for E-UTRAN) or subsequently (for UTRAN or GERAN; for GERAN and UTRAN, establishment of a packet data network connection is optional, in that such a connection is not needed for the device trigger procedure.

At S5, the user equipment can stay connected. Then, at S6, the machine type communication user can identify the need to trigger the device and can inform the machine type communication server.

The machine type communication server can, at S7, request the IWF to trigger the device. The server can provide, for example, the external identifier, application identifier for the device, and the like. The MTC-IWF can ensure that the request is an authentic request and can translate the appID to access point name and the extID to IMSI. At S8, the MTC-IWF can request from the home subscriber server the routing info (serving CN ID) by providing the IMSI for the device.

At S9, the MTC-IWF can use the CN ID to send a device trigger request message to the serving mobility management entity/SGSN. Finally, at S10, the mobility management entity / SGSN can receive the device trigger message, notice that the device is in connected mode, and send a non-access stratum (NAS) message (for example, a device trigger notification) encapsulating the necessary device trigger information to the user equipment.

Various embodiments may have benefits. In general, for GERAN/UTRAN: No CS infrastructure needed in a PS only environment e.g. Circuit Core - SS7 Signaling Network - SMSC not needed; (reduces deployment cost where this is not already deployed); Involved network elements - Radio Network, Packet Core, MTC-IWF. Likewise, for E-UTRAN: no "real" circuit switched infrastructure is needed. If the first embodiment described above (SMS) is to be supported for legacy UEs, either an SGs interface and some related circuit switched infrastructure can be used, or the mobility management entity can support at least the NAS signaling procedure for a combined attach for evolved packet system (EPS) service and SMS only towards the UE (without necessarily performing the signaling to the MSC/VLR via the SGs interface). Moreover, certain embodiments may work without assignment of MSISDN to the device.

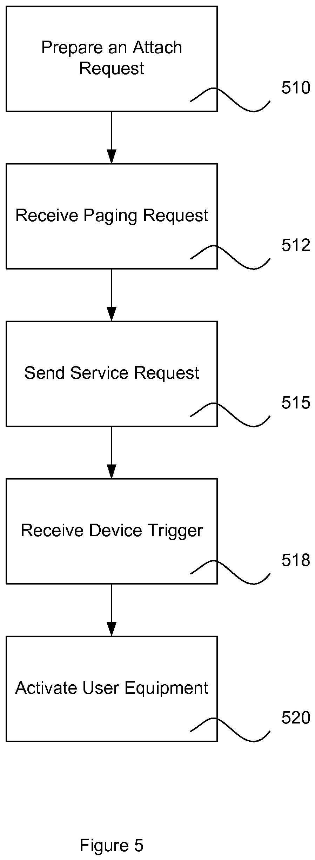

Figure 5 illustrates a method according to certain embodiments. The method shown in Figure 5 may be performed by, for example, a user equipment, which may be a machine type communication device. As shown in Figure 5, a method can include, at 510, preparing an attach request to be sent to a network element, wherein the attach request comprises an indication of a device trigger capability of a user equipment. The method can also include, at 520, activating the user equipment in response to a received device trigger, received at 518.

The method can additionally include, at 515, sending a service request in response to a received paging request (received at 512). The activating the user equipment can be in response to the received device trigger (at 518) and the received device trigger can be received in response to the service request. The activating the user equipment can performed in response to the received device trigger (received at 518) and the received device trigger can be received in a non-access stratum message. In such a case, the paging request and response thereto may be omitted.

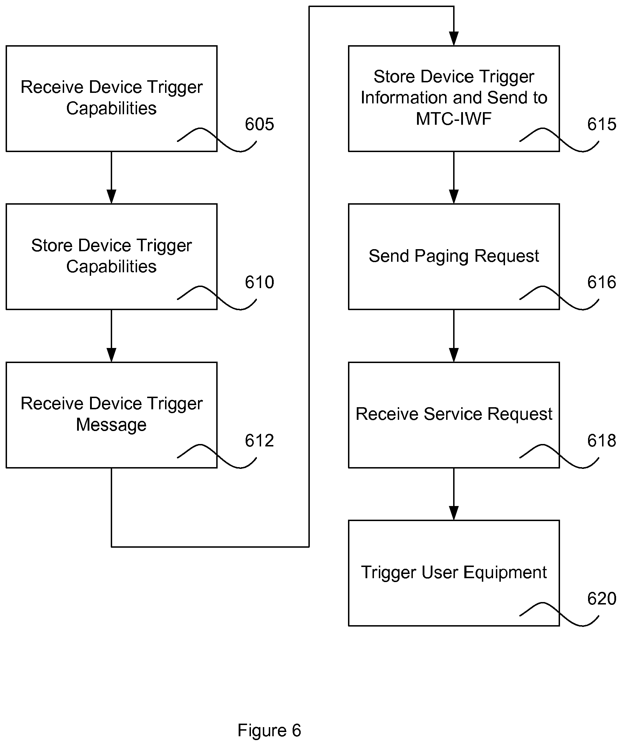

Figure 6 illustrates another method according to certain embodiments. The method of Figure 6 may be performed by a network element such as, for example, a mobility management entity or SGSN. As shown in Figure 6, a method can include, at 610, storing a device trigger capability of a user equipment received (at 605) from the user equipment. The method can also include, at 620, triggering the user equipment upon receiving (at 612) a device trigger message from a machine type communication interworking function.

The method can further include, at 615, storing device trigger information from the device trigger message and sending the device trigger capability of the user equipment to a machine type communication interworking function (MTC-IWF). The triggering the user equipment (at 620) can be performed after receiving (at 618) a service request from the user equipment. The method can additionally include, at 616, sending a paging request to the user equipment in order to receive (at 618) a responsive service request prior to triggering the user equipment. The triggering the user equipment can include sending at least one of a short message service message without the use of a short message service center or mobile switching center, a service accept message, or a non-access stratum device trigger message.

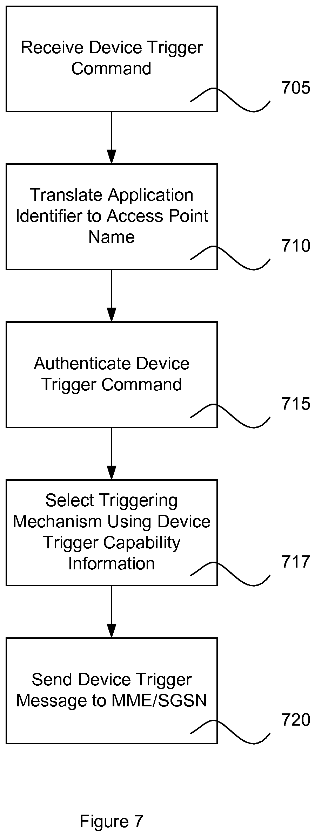

Figure 7 illustrates a further method according to certain embodiments. The method of Figure 7 may be performed by a network element such as, for example, a machine type communication interworking function (MTC-IWF). As shown in Figure 7, a method can include, at 710, translating an application identifier to an access point name in response to receiving (at 705) a device trigger message for a user equipment from a machine type communication server. The access point name information can be used by the user equipment to establish user plane connection with a gateway. The method can also include, at 720, sending a device trigger message to a network element serving the user equipment based on obtained routing information. The method can further include, at 715, authenticating the device trigger message prior to obtaining the routing information. The method can additionally include, at 717, selecting a triggering mechanism for the user equipment using a device trigger capability received from a mobility management entity.

The sending the device trigger message to the network element can include sending the device trigger message to at least one of a mobility management entity and a serving general packet radio service support node. In certain embodiments the machine type communication server and MTC-IWF can be co-located. In such an embodiment, the "message" from the server may be an internal message within the device that includes both the server and the MTC-IWF. The server itself may obtain the device trigger command from a machine type communication user.

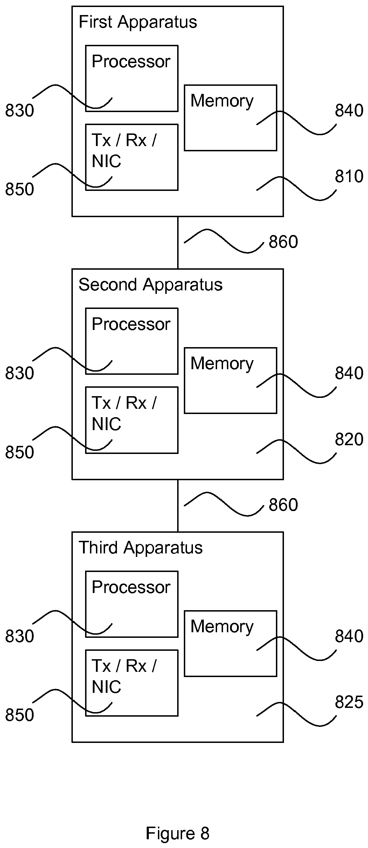

Figure 8 illustrates a system according to certain embodiments of the present invention. As shown in Figure 8, the system can include a first apparatus 810 (such as a user equipment), a second apparatus 820 (such as a mobility management entity or SGSN), and a third apparatus 825 (such as a MTC-IWF). Each of the apparatuses may be equipped with at least one processor 830, at least one memory 840 (including computer program instructions), and transceiver/network interface card 850 (other communications equipment, such as an antenna, may also be included). The apparatuses may be configured to communicate with one another over interfaces 860, which are shown as wired interfaces, but may incorporate both wireless and wired interfaces, and may be merely wireless interfaces.

The at least one processor 830 can be variously embodied by any computational or data processing device, such as a central processing unit (CPU) or application specific integrated circuit (ASIC). The at least one processor 830 can be implemented as one or a plurality of controllers.

The at least one memory 840 can be any suitable storage device, such as a non-transitory computer-readable medium. For example, a hard disk drive (HDD) or random access memory (RAM) can be used in the at least one memory 840. The at least one memory 840 can be on a same chip as the at least one processor 830, or may be separate from the at least one processor 830.

The computer program instructions may be any suitable form of memory 840. The at least one memory 840 can be on a same chip as the at least one processor 830, or may be separate from the at least one processor 830.

The computer program instructions may be any suitable form of computer program code. For example, the computer program instructions may be a compiled or interpreted computer program.

The at least one memory 840 and computer program instructions can be configured to, with the at least one processor 830, cause a hardware apparatus (for example, a user equipment, mobility management entity, or MTC-IWF) to perform a process, such as the processes shown in Figures 2-7 or any other process described herein.

Thus, in certain embodiments, a non-transitory computer-readable medium can be encoded with computer instructions that, when executed in hardware perform a process, such as one of the processes described above. Alternatively, certain embodiments of the present invention may be performed entirely in hardware.

One having ordinary skill in the art will readily understand that the invention as discussed above may be practiced with steps in a different order, and/or with hardware elements in configurations which are different than those which are disclosed. In order to determine the metes and bounds of the invention, therefore, reference should be made to the appended claims.

## Claims

1. A method, comprising:
a user equipment initiating an attach request and indicating the user equipment's device trigger capabilities in the device properties section of the request; a mobility management entity processing an attach procedure; the mobility management entity storing (610) the received device trigger capabilities of the user equipment (810);
the mobility management entity notifying a machine type communication interworking function of the device trigger capabilities; the machine type communication interworking function receiving from a machine type communication server, a request to trigger the user equipment;
the machine type communication interworking function sending (720) a device trigger request message to the mobility management entity;
the mobility management entity triggering (620) the user equipment upon receiving the device trigger message.

2. The method of claim 1, further comprising:
storing (615) device trigger information from the device trigger message, wherein the triggering (620) the user equipment is performed after receiving (618) a service request from the user equipment (810).

3. The method of claim 1, further comprising:
sending (616) a paging request to the user equipment (810) in order to receive (618) a responsive service request prior to triggering (620) the user equipment.

4. The method of claim 1, wherein the triggering (620) the user equipment (810) comprises sending at least one of a service accept message, a non-access stratum device trigger message, or a short message service message without the use of a short message service center or mobile switching center.

5. The method of any preceding claim, further comprising:
sending the device trigger capability of the user equipment (810) to a machine type communication interworking function (825).

6. The method of any preceding claim, further comprising: the user equipment receiving a non-access stratum message encapsulating device trigger information.

7. A method, comprising:
a user equipment initiating an attach request and indicating the user equipment's device trigger capabilities in the device properties section of the request; a mobility management entity processing an attach procedure; the mobility management entity storing the received device trigger capabilities of the user equipment (810);
the mobility management entity notifying a machine type communication interworking function of the device trigger capabilities; the machine type communication interworking function receiving (705), from a machine type communication server, a request to trigger the user equipment;
the machine type communication interworking function translating (710) an application identifier to an access point name and an external identifier to an international mobile subscriber identity in response to receiving (705) a device trigger message for a user equipment (810) from a machine type communication server;
the machine type communication interworking function sending (720) a device trigger request message to the mobility management entity; the mobility management entity triggering the user equipment upon receiving the device trigger message.

8. The method of claim 7, further comprising:
selecting (717) a triggering mechanism for the user equipment (810) using a device trigger capability received from a mobility management entity (820).

9. The method of claim 7 or claim 8, further comprising:
the user equipment receiving a non-access stratum message encapsulating device trigger information.

10. The method of any preceding claim, wherein a user equipment receives a non-access stratum message encapsulating device trigger information as a result.

11. An mobility management entity (820), comprising:
receiving means for receiving at least one device trigger capability of a user equipment in the device properties section of an attach request and for receiving the attach request from the user equipment;
storing means for storing the at least one received device trigger capability of the user equipment (810);
notifying means for notifying a machine type communication interworking function of the device trigger capabilities;
receiving means for receiving a device trigger request message from a machine type communication interworking function;
triggering means for triggering the user equipment upon receiving the device trigger message (825).

12. An machine type communication interworking function (825), comprising:
receiving means for receiving at least one device trigger capability of a user equipment from a mobility management entity and a device trigger message for a user equipment (810) from a machine type communication server;
translating means for translating an application identifier to an access point name and an external identifier to an international mobile subscriber identity in response to receiving the device trigger message; and
triggering means for sending a device trigger request message to the mobility management entity upon receiving the device trigger message.

13. The apparatus of claim 12, further comprising:
selecting means for selecting a triggering mechanism for the user equipment (810) using a device trigger capability received from a mobility management entity (820).

14. A non-transitory computer readable medium encoded with instructions that, when executed in hardware, perform a process, the process comprising the method according to any of claims 1-10.

## Patentansprüche

1. Verfahren, umfassend:
ein Benutzer-Equipment, das eine Anschlussanforderung initiiert und die Auslösefähigkeiten eines Gerätes des Benutzer-Equipments im Abschnitt der Anforderung zu Einrichtungseigenschaften angibt;
eine Mobilitätsmanagemententität, die eine Anschlussprozedur abarbeitet;
wobei die Mobilitätsmanagemententität die empfangenen Auslösefähigkeiten eines Gerätes des Benutzer-Equipments (810) speichert (610);
wobei die Mobilitätsmanagemententität eine Maschinentyp-Kommunikationszusammenarbeitsfunktion der Auslösefähigkeiten des Gerätes mitteilt;
wobei die Maschinentyp-Kommunikationszusammenarbeitsfunktion von einem Maschinentyp-Kommunikationsserver eine Anforderung zum Auslösen des Benutzer-Equipments empfängt;
wobei die Maschinentyp-Kommunikationszusammenarbeitsfunktion eine Einrichtungsauslöse-Anforderungsnachricht zur Mobilitätsmanagemententität sendet (720);
wobei die Mobilitätsmanagemententität das Benutzer-Equipment beim Empfang der Einrichtungsauslösenachricht auslöst (620).

2. Verfahren nach Anspruch 1, ferner umfassend:
Speichern (615) von Einrichtungsauslöseinformation aus der Einrichtungsauslösenachricht, wobei das Triggering (620) des Benutzer-Equipments nach dem Empfangen (618) einer Dienstanforderung von dem Benutzer-Equipment (810) durchgeführt wird.

3. Verfahren nach Anspruch 1, ferner umfassend:
Senden (616) einer Paging-Anforderung zum Benutzer-Equipment (810), um vor dem Triggering (620) des Benutzer-Equipments eine entsprechende Dienstanforderung zu empfangen (618).

4. Verfahren nach Anspruch 1, wobei das Triggering (620) des Benutzer-Equipments (810) das Senden von mindestens einer Dienstakzeptanznachricht, einer Non-Stratum-Access-Einrichtungsauslösenachricht oder einer Kurznachrichtendienst-Nachricht ohne Verwendung eines Kurznachrichtendienst-Centers oder einer Mobilvermittlungsstelle umfasst.

5. Verfahren nach einem der vorstehenden Ansprüche, ferner umfassend:
Senden der Einrichtungsauslösefähigkeit des Benutzer-Equipments (810) zu einer Maschinentyp-Kommunikationszusammenarbeitsfunktion (825).

6. Verfahren nach einem der vorstehenden Ansprüche, ferner umfassend:
Empfangen einer Einrichtungsauslöseinformation einkapselnden Non-Access-Stratum-Nachricht durch das Benutzer-Equipment.

7. Verfahren, umfassend:
ein Benutzer-Equipment, das eine Anschlussanforderung initiiert und die Auslösefähigkeiten eines Gerätes des Benutzer-Equipments im Abschnitt der Anforderung zu Einrichtungseigenschaften angibt;
eine Mobilitätsmanagemententität, die eine Anschlussprozedur abarbeitet;
wobei die Mobilitätsmanagemententität die empfangenen Auslösefähigkeiten eines Gerätes des Benutzer-Equipments (810) speichert;
wobei die Mobilitätsmanagemententität eine Maschinentyp-Kommunikationszusammenarbeitsfunktion der Auslösefähigkeiten des Gerätes mitteilt;
wobei die Maschinentyp-Kommunikationszusammenarbeitsfunktion von einem Maschinentyp-Kommunikationsserver eine Anforderung zum Auslösen des Benutzer-Equipments empfängt (705);
wobei die Maschinentyp-Kommunikationszusammenarbeitsfunktion in Reaktion auf das Empfangen (705) einer Anforderung zum Auslösen einer Einrichtungsauslösenachricht für ein Benutzer-Equipment (810) von einem Maschinentyp-Kommunikationsserver eine Anwendungskennung in einen Zugangspunkt-Namen und eine externe Kennung in eine internationale Mobilfunk-Teilnehmerkennung übersetzt (710);
wobei die Maschinentyp-Kommunikationszusammenarbeitsfunktion eine Einrichtungsauslöse-Anforderungsnachricht zu der Mobilitätsmanagemententität sendet (720);
wobei die Mobilitätsmanagemententität das Benutzer-Equipment beim Empfang der Einrichtungsauslösenachricht auslöst.

8. Verfahren nach Anspruch 7, ferner umfassend:
Auswählen (717) eines Triggering-Mechanismus für das Benutzer-Equipment (810) unter Verwendung einer von einer Mobilitätsmanagemententität (820) empfangenen Einrichtungsauslösefähigkeit.

9. Verfahren nach Anspruch 7 oder Anspruch 8, ferner umfassend:
Empfangen einer Einrichtungsauslöseinformation einkapselnden Non-Access-Stratum-Nachricht durch das Benutzer-Equipment.

10. Verfahren nach einem der vorstehenden Ansprüche, wobei ein Benutzer-Equipment als Ergebnis eine Einrichtungsauslöseinformation einkapselnde Non-Access-Stratum-Nachricht empfängt.

11. Mobilitätsmanagemententität (820), umfassend:
Empfangsmittel zum Empfangen mindestens einer Auslösefähigkeit eines Gerätes eines Benutzer-Equipments im Abschnitt einer Anschlussanforderung zu Einrichtungseigenschaften und zum Empfangen der Anschlussanforderung von dem Benutzer-Equipment;
Speichermittel zum Speichern der mindestens einen empfangenen Auslösefähigkeit eines Gerätes des Benutzer-Equipments (810);
Benachrichtigungsmittel zum Mitteilen einer Maschinentyp-Kommunikationszusammenarbeitsfunktion der Auslösefähigkeiten des Gerätes;
Empfangsmittel zum Empfangen einer Einrichtungsauslöse-Anforderungsnachricht von einer Maschinentyp-Kommunikationszusammenarbeitsfunktion;
Triggering-Mittel zum Triggering des Benutzer-Equipments beim Empfang der Einrichtungsauslösenachricht (825).

12. Maschinentyp-Kommunikationszusammenarbeitsfunktion (825), umfassend:
Empfangsmittel zum Empfangen mindestens einer Einrichtungsauslösefähigkeit eines Benutzer-Equipments von einer Mobilitätsmanagemententität und einer Einrichtungsauslösenachricht für ein Benutzer-Equipment (810) von einem Maschinentyp-Kommunikationsserver;
Übersetzungsmittel zum Übersetzen einer Anwendungskennung in einen Zugangspunkt-Namen und einer externen Kennung in eine internationale Mobilfunk-Teilnehmerkennung in Reaktion auf den Empfang der Einrichtungsauslösenachricht; und
Triggering-Mittel zum Senden einer Einrichtungsauslöse-Anforderungsnachricht zu der Mobilitätsmanagemententität beim Empfang der Einrichtungsauslösenachricht.

13. Vorrichtung nach Anspruch 12, ferner umfassend:
Auswahlmittel zum Auswählen eines Triggering-Mechanismus für das Benutzer-Equipment (810) unter Verwendung einer von einer Mobilitätsmanagemententität (820) empfangenen Einrichtungsauslösefähigkeit.

14. Nicht vorübergehendes rechnerlesbares Medium, codiert mit Anweisungen, die bei Ausführung in Hardware einen Prozess durchführen, wobei der Prozess das Verfahren nach einem der Ansprüche 1-10 umfasst.

## Revendications

1. Procédé comprenant :
le lancement par un équipement utilisateur d'une requête de rattachement et l'indication des capacités de déclenchement de dispositif de l'équipement utilisateur dans la section des propriétés de dispositif de la requête,
le traitement, par une entité de gestion de mobilité, d'une procédure de rattachement,
le stockage (610), par l'entité de gestion de mobilité, des capacités reçues de déclenchement de dispositif de l'équipement utilisateur (810),
la notification, par l'entité de gestion de mobilité, faite à une fonction d'interopérabilité de communication de type machine sur les capacités de déclenchement de dispositif,
la réception, par la fonction d'interopérabilité de communication de type machine, d'une requête pour déclencher l'équipement utilisateur, en provenance d'un serveur de communication de type machine,
l'envoi (720), par la fonction d'interopérabilité de communication de type machine, d'un message de requête de déclenchement à l'entité de gestion de mobilité,
le déclenchement (620), par l'entité de gestion de mobilité, de l'équipement utilisateur à la réception du message de déclenchement de dispositif.

2. Procédé selon la revendication 1, comprenant en outre :
le stockage (615) d'informations de déclenchement de dispositif à partir du message de déclenchement de dispositif, le déclenchement (620) de l'équipement utilisateur étant effectué après avoir reçu (618) une requête de service provenant de l'équipement utilisateur (810) .

3. Procédé selon la revendication 1, comprenant en outre :
l'envoi (616) d'une requête de recherche de personne à l'équipement utilisateur (810) afin de recevoir (618) une requête de service en réponse avant de déclencher (620) l'équipement utilisateur.

4. Procédé selon la revendication 1, dans lequel le déclenchement (620) de l'équipement utilisateur (810) comprend l'envoi d'au moins l'un parmi un message d'acceptation de service, un message de déclenchement de dispositif en strate de non accès ou un message du service de messages courts, sans l'utilisation d'un centre de service de messages courts ni d'un centre d'auto commutation mobile.

5. Procédé selon l'une quelconque des revendications précédentes, comprenant en outre :
l'envoi de la capacité de déclenchement de dispositif de l'équipement utilisateur (810) à une fonction d'interopérabilité de communication de type machine (825).

6. Procédé selon l'une quelconque des revendications précédentes, comprenant en outre :
la réception, par l'équipement utilisateur, d'un message de strate de non accès encapsulant des informations de déclenchement de dispositif.

7. Procédé comprenant :
le lancement par un équipement utilisateur d'une requête de rattachement et l'indication des capacités de déclenchement de dispositif de l'équipement utilisateur dans la section des propriétés de dispositif de la requête,
le traitement, par une entité de gestion de mobilité, d'une procédure de rattachement,
le stockage, par l'entité de gestion de mobilité, des capacités reçues de déclenchement de dispositif de l'équipement utilisateur (810),
la notification, par l'entité de gestion de mobilité, faite à une fonction d'interopérabilité de communication de type machine sur les capacités de déclenchement de dispositif,
la réception (705), par la fonction d'interopérabilité de communication de type machine, d'une requête pour déclencher l'équipement utilisateur, en provenance d'un serveur de communication de type machine,
la traduction (710), par la fonction d'interopérabilité de communication de type machine, d'un identificateur d'application vers un nom de point d'accès et d'un identificateur externe vers une identité d'abonné mobile international en réponse à la réception (705) d'un message de déclenchement de dispositif pour un équipement utilisateur (810) en provenance d'un serveur de communication de type machine,
l'envoi (720), par la fonction d'interopérabilité de communication de type machine, d'un message de requête de déclenchement à l'entité de gestion de mobilité,
le déclenchement, par l'entité de gestion de mobilité, de l'équipement utilisateur à la réception du message de déclenchement de dispositif.

8. Procédé selon la revendication 7, comprenant en outre :
la sélection (717) d'un mécanisme de déclenchement pour l'équipement utilisateur (810) en utilisant une capacité de déclenchement de dispositif reçue en provenance d'une entité de gestion de mobilité (820).

9. Procédé selon la revendication 7 ou la revendication 8, comprenant en outre :
la réception, par l'équipement utilisateur, d'un message de strate de non accès encapsulant des informations de déclenchement de dispositif.

10. Procédé selon l'une quelconque des revendications précédentes, dans lequel un équipement utilisateur reçoit en tant que résultat un message de strate de non accès encapsulant des informations de déclenchement de dispositif.

11. Entité de gestion de mobilité (820) comprenant :
un moyen de réception destiné à recevoir au moins une capacité de déclenchement de dispositif concernant un équipement utilisateur dans la section des propriétés de dispositif d'une requête de rattachement, ainsi que destiné à recevoir la requête de rattachement en provenance de l'équipement utilisateur,
un moyen de stockage destiné à stocker la ou les capacités de déclenchement de dispositif reçues de l'équipement utilisateur (810),
un moyen de notification destiné à signaler les capacités de déclenchement de dispositif à une fonction d'interopérabilité de communication de type machine,
un moyen de réception destiné à recevoir un message de requête de déclenchement de dispositif en provenance d'une fonction d'interopérabilité de communication de type machine,
un moyen de déclenchement destiné à déclencher l'équipement utilisateur à la réception du message de déclenchement de dispositif (825).

12. Fonction d'interopérabilité de communication de type machine (825) comprenant :
un moyen de réception destiné à recevoir au moins une capacité de déclenchement de dispositif d'un équipement utilisateur en provenance d'une entité de gestion de mobilité, ainsi qu'un message de déclenchement de dispositif pour un équipement utilisateur (810) en provenance d'un serveur de communication de type machine,
un moyen de traduction destiné à traduire un identificateur d'application vers un nom de point d'accès et un identificateur externe vers une identité d'abonné mobile international en réponse à la réception du message de déclenchement de dispositif, et
un moyen de déclenchement destiné à envoyer un message de requête de déclenchement de dispositif à l'entité de gestion de mobilité à la réception du message de déclenchement de dispositif.

13. Appareil selon la revendication 12, comprenant en outre :
un moyen de sélection destiné à sélectionner un mécanisme de déclenchement pour l'équipement utilisateur (810) en utilisant une capacité de déclenchement de dispositif reçue d'une entité de gestion de mobilité (820) .

14. Support non transitoire pouvant être lu par ordinateur codé avec des instructions qui, lorsqu'elles sont exécutées par un matériel, effectuent un traitement, le traitement comprenant le procédé conforme à l'une quelconque des revendications 1 à 10.
